# EUROPEAN PATENT APPLICATION

(11) **EP 3 982 320 A1**
(43) Date of publication of application: **13.04.2022**
(21) Application number: 20867373.1
(22) Date of filing: 06.03.2020
(51) Int. Cl.: G06Q 40/04, G06F 21/64

(54) **METHOD AND DEVICE FOR EXECUTING SMART CONTRACT**

(30) Priority: 24.09.2019 CN 201910904529
(71) Applicant: Jingdong Technology Information Technology Co., Ltd., Beijing 100176 (CN)
(72) Inventor: SHAO, Zhuguang, Beijing 100176 (CN)
(74) Representative: Mewburn Ellis LLP
(86) International application number: PCT/CN2020/078103
(87) International publication number: WO 2021/056970

(57) **Abstract**

A method and device for executing a smart contract. The method comprises: receiving a contract execution transaction comprising user information, difficulty information, and contract parameters (201); searching, according to the user information, for prestored difficulty information corresponding to the user information (202), the difficulty information corresponding to the user information being determined according to execution result information of a contract execution transaction submitted by the user last time indicated by the user information; executing the following verification step: determining whether the difficulty information in the contract execution transaction is consistent with the found difficulty information (203); in response to determining that the difficulty information in the contract execution transaction is consistent with the found difficulty information, executing a smart contract according to the contract parameters to obtain execution result information (204); and updating the prestored difficulty information corresponding to the user information according to the obtained execution result information (205). The method controls effective execution of a smart contract according to difficulty information.

## Description

This patent application claims benefit of priority to Chinese Patent Application No. 201910904529.9, filed on September 24, 2019, and entitled "Method and apparatus for executing smart contract," the entire disclosure of which is incorporated herein by reference in its entity.

### TECHNICAL FIELD

Embodiments of the present disclosure relate to the field of computer technology, and in particular to a method and apparatus for executing a smart contract.

### BACKGROUND

At present, the combined application of smart contracts and blockchain is a research direction in the current blockchain technology field. A smart contract is a computer protocol designed to spread, verify, or execute a contract in an information-based way. Smart contracts allow for trusted transactions without a third party, which are traceable and irreversible.

The execution process of each smart contract requires a certain amount of time resources, computing resources, etc., and each node in the blockchain system has limited computing resources. In order to avoid the abuse of smart contracts and malicious attacks by criminals, it is necessary to control the execution of smart contracts.

In the existing art, in order to avoid the abuse of smart contracts and malicious attacks by criminals, Ethereum proposes a GAS mechanism. Specifically, by controlling the execution of each smart contract transaction, users need to pay a certain fee to avoid Ethereum's deadlock caused by the abuse of smart contracts and malicious attacks by criminals.

### SUMMARY

Embodiments of the present disclosure propose a method and apparatus for executing a smart contract.

In a first aspect, an embodiment of the present disclosure provides a method for executing a smart contract. The method includes: receiving a contract execution transaction comprising user information, difficulty information, and contract parameters, the contract parameters being used to indicate parameters of a to-be-executed smart contract of the contract execution transaction; searching, according to the user information, for prestored difficulty information corresponding to the user information, the difficulty information corresponding to the user information being determined according to execution result information of a contract execution transaction submitted by the user last time indicated by the user information; executing verification by: determining whether the difficulty information in the contract execution transaction is consistent with the found difficulty information. The method further includes: executing, in response to determining that the difficulty information in the contract execution transaction is consistent with the found difficulty information, the smart contract according to the contract parameters to obtain execution result information; and updating the prestored difficulty information corresponding to the user information according to the obtained execution result information.

In some embodiments, the updating the prestored difficulty information corresponding to the user information according to the obtained execution result information, includes: determining, according to a preset difficulty information update strategy, difficulty information corresponding to the execution result information as an update result of the prestored difficulty information corresponding to the user information.

In some embodiments, the execution result information includes at least one of: computing resources spent in the execution process, time resources spent in the execution process, or execution status information used to indicate success or failure of execution, where the difficulty information corresponding to the execution result information is positively correlated with the corresponding computing resources, and the difficulty information corresponding to the execution result information is positively correlated with the corresponding time resources.

In some embodiments, the executing the smart contract according to the contract parameters to obtain execution result information, includes: setting, in response to detecting that the smart contract starts to execute, at least one timer task, where the timer task is used to detect whether the execution of the smart contract is completed at a task triggering moment. For a timer task in the at least one timer task, performing following operations: in response to determining that the timer task detects that the execution of the smart contract is completed, deleting an unexecuted timer task in the at least one timer task, and recording the execution result information of the smart contract; determining, in response to determining that the timer task has not detected completion of the execution of the smart contract, whether the computing resources and/or time resources spent in executing the smart contract at the task triggering moment of the timer exceeds a preset resource threshold; and in response to determining that the computing resources and/or time resources spent in executing the smart contract at the task triggering moment of the timer exceed the preset resource threshold, terminating the execution of the smart contract, and recording the execution result information of the smart contract.

In some embodiments, the time resources include at least one of: an execution duration, or a number of times of execution of a timer.

In some embodiments, the executing the smart contract according to the contract parameters to obtain execution result information, further includes: in response to receiving instruction information for indicating the completion of the execution of the smart contract at a moment other than task triggering moments respectively corresponding to the at least one timer task, deleting the unexecuted timer task in the at least one timer task, and recording the execution result information of the smart contract.

In some embodiments, the contract execution transaction further includes: a random number and verification information; and the verification further includes: calculating the verification information based on the random number and the contract parameters, and determining whether the calculated verification information is consistent with verification information in the contract execution transaction; determining, based on a proof-of-work technology, whether the verification information in the contract execution transaction is abnormal verification information; and the executing, in response to determining that the difficulty information in the contract execution transaction is consistent with the found difficulty information, the smart contract according to the contract parameters to obtain execution result information, includes: in response to determining that the difficulty information in the contract execution transaction is consistent with the found difficulty information, the calculated verification information is consistent with the verification information in the contract execution transaction, and the verification information in the contract execution transaction is not abnormal verification information, executing the smart contract according to the contract parameters to obtain the execution result information.

In a second aspect, an embodiment of the present disclosure provides an apparatus for executing a smart contract. The apparatus includes: a receiving unit, configured to receive a contract execution transaction comprising user information, difficulty information, and contract parameters, the contract parameters being used to indicate parameters of a to-be-executed smart contract of the contract execution transaction; a searching unit, configured to search, according to the user information, for prestored difficulty information corresponding to the user information, the difficulty information corresponding to the user information being determined according to execution result information of a contract execution transaction submitted by the user last time indicated by the user information; a determining unit, configured to execute verification by: determining whether the difficulty information in the contract execution transaction is consistent with the found difficulty information. The apparatus further includes: an executing unit, configured to execute, in response to determining that the difficulty information in the contract execution transaction is consistent with the found difficulty information, the smart contract according to the contract parameters to obtain execution result information; and an updating unit, configured to update the prestored difficulty information corresponding to the user information according to the obtained execution result information.

In some embodiments, the updating unit is further configured to: determine, according to a preset difficulty information update strategy, difficulty information corresponding to the execution result information as an update result of the prestored difficulty information corresponding to the user information.

In some embodiments, the execution result information includes at least one of: computing resources spent in the execution process, time resources spent in the execution process, or execution status information used to indicate success or failure of execution, where the difficulty information corresponding to the execution result information is positively correlated with the corresponding computing resources, and the difficulty information corresponding to the execution result information is positively correlated with the corresponding time resources.

In some embodiments, the executing unit is further configured to: set, in response to detecting that the smart contract starts to execute, at least one timer task, where the timer task is used to detect whether the execution of the smart contract is completed at a task triggering moment; for a timer task in the at least one timer task, perform following operations: in response to determining that the timer task detects that the execution of the smart contract is completed, deleting an unexecuted timer task in the at least one timer task, and recording the execution result information of the smart contract; determining, in response to determining that the timer task has not detected completion of the execution of the smart contract, whether the computing resources and/or time resources spent in executing the smart contract at the task triggering moment of the timer exceeds a preset resource threshold; and in response to determining that the computing resources and/or time resources spent in executing the smart contract at the task triggering moment of the timer exceed the preset resource threshold, terminating the execution of the smart contract, and recording the execution result information of the smart contract.

In some embodiments, the time resources include at least one of: an execution duration, or a number of times of execution of a timer.

In some embodiments, the executing unit is further configured to: in response to receiving instruction information for indicating the completion of the execution of the smart contract at a moment other than the task triggering moment corresponding to the at least one timer task respectively, delete the unexecuted timer task in the at least one timer task, and record the execution result information of the smart contract.

In some embodiments, the contract execution transaction further includes: a random number and verification information; and the verification further includes: calculating the verification information based on the random number and the contract parameters, and determining whether the calculated verification information is consistent with verification information in the contract execution transaction; determining, based on a proof-of-work technology, whether the verification information in the contract execution transaction is abnormal verification information; and the executing unit is further configured to: in response to determining that the difficulty information in the contract execution transaction is consistent with the found difficulty information, the calculated verification information is consistent with the verification information in the contract execution transaction, and the verification information in the contract execution transaction is not abnormal verification information, execute the smart contract according to the contract parameters to obtain the execution result information.

In a third aspect, an embodiment of the present disclosure provides an electronic device, including: one or more processors; and a storage apparatus storing one or more programs thereon. The one or more programs, when executed by the one or more processors, cause the one or more processors to implement the method according to any implementation in the first aspect.

In a fourth aspect, an embodiment of the present disclosure provides a computer-readable medium, storing a computer program thereon. The program, when executed by a processor, implements the method according to any implementation in the first aspect.

The method and apparatus for executing a smart contract provided by the embodiments of the present disclosure, control the execution of the contract execution transaction using the difficulty information, specifically, according to the execution result information of the contract execution transaction executed each time, the difficulty information corresponding to the user who submitted the contract execution transaction is updated, so as to verify a contract execution transaction submitted by the user next time, so that malicious execution of smart contract transactions may be avoided by controlling the difficulty information, and effective execution of contract execution transactions may be realized.

### BRIEF DESCRIPTION OF THE DRAWINGS

By reading the detailed description of non-limiting embodiments with reference to the following accompanying drawings, other features, objects and advantages of the present disclosure will become more apparent.
Fig. 1 is an exemplary system architecture diagram to which an embodiment of the present disclosure may be applied;
Fig. 2 is a flowchart of an embodiment of a method for executing a smart contract according to the present disclosure;
Fig. 3 is a schematic diagram of an application scenario of the method for executing a smart contract according to an embodiment of the present disclosure;
Fig. 4 is a flowchart of another embodiment of the method for executing a smart contract according to the present disclosure;
Fig. 5 is a schematic structural diagram of an embodiment of an apparatus for executing a smart contract according to the present disclosure; and
Fig. 6 is a schematic structural diagram of an electronic device adapted to implement embodiments of the present disclosure.

### DETAILED DESCRIPTION OF EMBODIMENTS

Embodiments of the present disclosure will be further described below in detail in combination with the accompanying drawings. It may be appreciated that detailed embodiments described herein are merely used for explaining the relevant invention, rather than limiting the invention. In addition, it should be noted that, for the ease of description, only the parts related to the relevant invention are shown in the accompanying drawings.

It should be noted that embodiments in the present disclosure and the features in embodiments may be combined with each other on a non-conflict basis. Embodiments of the present disclosure will be described below in detail with reference to the accompanying drawings.

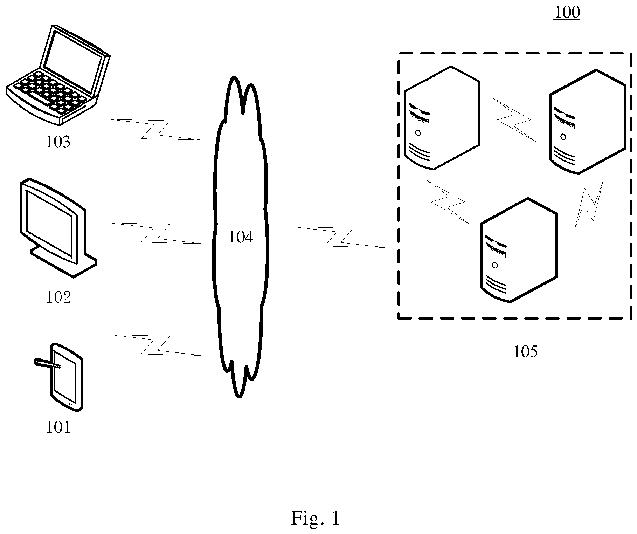

Fig. 1 shows an exemplary architecture 100 to which an embodiment of a method for executing a smart contract or an apparatus for executing a smart contract of the present disclosure may be applied.

As shown in Fig. 1, the system architecture 100 may include terminal devices 101, 102, 103, a network 104 and a blockchain system 105. The blockchain system 105 may include one or more nodes, and the nodes may be communicatively connected. The network 104 serves as a medium for providing a communication link between the terminal devices 101, 102, 103 and the blockchain system 105. The network 104 may include various types of connections, such as wired or wireless communication links, or optical fiber cables.

The terminal devices 101, 102, 103 interact with the blockchain system 105 through the network 104 to receive or send messages and so on. Various communication client applications may be installed on the terminal devices 101, 102, 103, for example, smart contract development platform, blockchain application platform, etc.

The terminal devices 101, 102, and 103 may be hardware or software. When the terminal devices 101, 102, 103 are hardware, they may be various electronic devices, including but not limited to smart phones, tablet computers, E-book readers, laptop computers, desktop computers, and so on. When the terminal devices 101, 102, 103 are software, they may be installed in the electronic devices listed above. They may be implemented as a plurality of software or software modules (for example, a plurality of software or software modules used to provide distributed services), or as a single software or software module, which is not limited herein.

The one or more nodes in the blockchain system 105 may provide various services, for example, may receive smart contract release requests sent on the terminal devices 101, 102, 103, and complete the execution of the smart contract.

It should be noted that the method for executing a smart contract provided by the embodiments of the present disclosure is generally performed by the nodes in the blockchain system 105. Correspondingly, the apparatus for executing a smart contract is generally provided in the nodes in the blockchain system 105.

It should be noted that each node in the blockchain system 105 may be a single server, or may be composed of a plurality of servers or a plurality of server clusters. The server may be hardware or software. When the server is hardware, it may be implemented as a distributed server cluster composed of a plurality of servers, or as a single server. When the server is software, it may be implemented as a plurality of software or software modules (for example, a plurality of software or software modules used to provide distributed services), or as a single software or software module, which is not limited herein.

It should be appreciated that the number of the terminal devices, the network and the blockchain system in Fig. 1 is merely illustrative. Any number of terminal devices, networks and blockchain systems may be provided according to actual requirements.

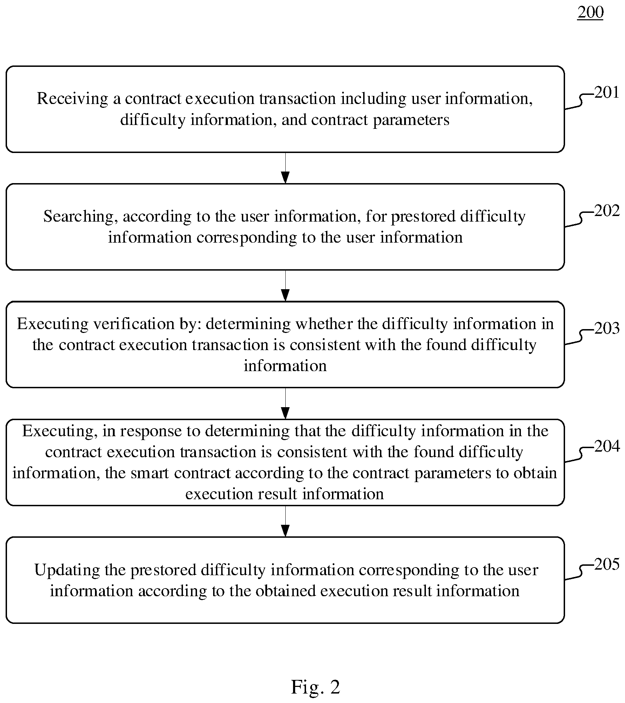

With further reference to Fig. 2, illustrating a flow 200 of an embodiment of a method for executing a smart contract according to the present disclosure. The method for executing a smart contract includes the following steps.

Step 201, receiving a contract execution transaction including user information, difficulty information, and contract parameters.

In the present embodiment, an executing body (the node in the blockchain system 105 as shown in Fig. 1) of the method for executing a smart contract may receive the contract execution transaction submitted by a user for executing the smart contract. The user information may be various information used to identify the user. The contract parameters may be used to indicate parameters of a to-be-executed smart contract of the contract execution transaction. For example, the contract parameters may be input parameters of the smart contract.

The difficulty information may be used to represent the difficulty of generating the submitted contract execution transaction. The difficulty of generating the submitted contract execution transaction may be determined by various methods flexibly selected according to different application scenarios.

For example, the difficulty of generating the submitted contract execution transaction may be determined based on the Proof-of-Work (PoW) technology. In this regard, the difficulty of generating the submitted contract execution transaction may be determined based on a workload of generating the submitted contract execution transaction. Typically, the difficulty is positively related to the workload.

Proof of work is an economic countermeasure to service and resource abuse, or to block service attacks. Generally, users are required to perform some time-consuming and appropriate complex calculations, and answers can be quickly checked by the service party. The time, equipment, and energy consumed are used as guarantee costs to ensure that services and resources are used by real needs. At present, a commonly used technical principle of the proof-of-work technology is hash function. The proof-of-work technology is a well-known technology widely studied and applied at present, and detailed description thereof will be omitted.

The difficulty information may be represented in various ways. For example, the difficulty information may be represented by a numeric value or a character string. Different numeric values or character strings are used to represent different levels of difficulty.

In some alternative implementations of the present embodiment, when the proof of work is implemented based on the hash function, the proof of work may be implemented by controlling the difficulty of a hash value generated based on the hash function. In this regard, the difficulty information may be used to represent the difficulty of the hash value generated based on the hash function. As an example, the difficulty information may be represented by the number of digits D. Here, D may be used to indicate that a value of the first D digits of the hash value generated based on the hash function is 0.

Step 202, searching, according to the user information, for prestored difficulty information corresponding to the user information.

In the present embodiment, the executing body may pre-store a corresponding relationship between the user information and the difficulty information. The pre-stored difficulty information corresponding to the user information may be determined according to execution result information of a contract execution transaction submitted by the user last time indicated by the user information. The execution result information may refer to various information related to the execution process of the contract execution transaction.

Alternatively, the execution result information may include at least one of: computing resources spent in the execution process, time resources spent in the execution process, or execution status information used to indicate success or failure of execution.

The computing resources may include at least one of: CPU (Central Processing Unit) resources, memory resources, hard disk resources, or network resources. The time resources may include an execution duration.

The execution result information may reflect the workload of the execution process of the contract execution transaction to a certain extent, therefore, the difficulty information may be determined based on the execution result information.

Alternatively, when the execution result information includes the computing resources, the difficulty information corresponding to the execution result information may be positively correlated with the corresponding computing resources. When the execution result information includes the time resources, the difficulty information corresponding to the execution result information may be positively correlated with the corresponding time resources. In other words, the more the computing resources spent to execute the contract execution transaction, the higher the difficulty represented by the difficulty information. The more the time resources spent to execute the contract execution transaction, the higher the difficulty represented by the difficulty information.

In the present embodiment, a corresponding relationship between the execution result information and the difficulty information may be preset by those skilled in the art. In this regard, the corresponding difficulty information may be directly searched according to the execution result information of the contract execution transaction submitted by the user last time.

In some alternative implementations of the present embodiment, a difficulty information update strategy may be preset by those skilled in the art. In this regard, difficulty information corresponding to the execution result information of the contract execution transaction submitted by the user last time may be determined in accordance with the preset difficulty information update strategy, according to the execution result information of the contract execution transaction submitted by the user last time. The difficulty information update strategy may be set according to actual application requirements. For example, the difficulty information update strategy may be various preset algorithms for calculating the difficulty information according to the execution result information of the contract execution transaction.

It should be noted that when the user submits a contract execution transaction for the first time, the difficulty information corresponding to the user information may be initial difficulty information preset by those skilled in the art.

Step 203, executing verification by: determining whether the difficulty information in the contract execution transaction is consistent with the found difficulty information.

In the present embodiment, the difficulty information may be used as a method to verify whether the contract execution transaction is an abnormal contract execution transaction. If the difficulty information in the contract execution transaction is inconsistent with the found difficulty information, it may indicate that the contract execution transaction is an abnormal transaction (such as a forged contract execution transaction).

In some alternative implementations of the present embodiment, the contract execution transaction may further include: a random number and verification information. The verification information may be obtained based on the random number and the contract parameters in the contract execution transaction. The method for determining the verification information may be flexibly set by those skilled in the art according to the application scenario. For example, the verification information may be determined based on the random number in the contract execution transaction and a hash budget result of the contract parameters.

In this regard, the verification may further include: calculating the verification information based on the random number and the contract parameters in the contract execution transaction, and determining whether the calculated verification information is consistent with verification information in the contract execution transaction. In this regard, the verification information in the contract execution transaction may also be used as a method to verify whether the contract execution transaction is an abnormal contract execution transaction. If the calculated verification information is inconsistent with the verification information in the contract execution transaction, it may indicate that the contract execution transaction is an abnormal transaction (such as a forged contract execution transaction).

In addition, the verification may further include: determining, based on a proof-of-Work technology, whether the verification information in the contract execution transaction is abnormal verification information. It may be determined whether the verification information in the contract execution transaction meets a preset work requirement. If it is determined that the verification information in the contract execution transaction does not meet the preset work requirement, it may indicate that the verification information in the contract execution verification is abnormal verification information. Therefore, the contract execution transaction is an abnormal transaction (such as a forged contract execution transaction).

Thus, multiple information such as the difficulty information and the verification information in the contract execution transaction may be verified to ensure the correctness of the received contract execution verification, thereby further ensuring the security of an execution process of the smart contract and avoiding situations where the execution of the smart contract may cause damage to the blockchain system.

Step 204, executing, in response to determining that the difficulty information in the contract execution transaction is consistent with the found difficulty information, the smart contract according to the contract parameters to obtain execution result information.

In the present embodiment, if it is determined that the difficulty information in the contract execution transaction is consistent with the found difficulty information, it may indicate that the contract execution transaction is normal, and the smart contract may be further executed according to the contract parameters.

It should be understood that, as mentioned above, when the contract execution transaction further includes the random number and the verification information, in addition to the verification information, the verification information in the contract execution transaction also needs to be verified. In this regard, in response to determining that the difficulty information in the contract execution transaction is consistent with the found difficulty information, and determining that the calculated verification information is consistent with the verification information in the contract execution transaction, and determining that the verification information in the contract execution transaction is not abnormal verification information, the smart contract is executed according to the contract parameters to obtain the execution result information. In other words, the difficulty information and the verification information in the contract execution transaction both need to be verified, thereafter the smart contract can be further executed.

Step 205, updating the prestored difficulty information corresponding to the user information according to the obtained execution result information.

In the present embodiment, as mentioned above, the corresponding relationship between the execution result information and the difficulty information may be preset. In this regard, according to the execution result information, the corresponding difficulty information may be found, and the prestored difficulty information corresponding to the user information may be updated to the found difficulty information.

Alternatively, according to the preset difficulty information update strategy, the difficulty information corresponding to the execution result information of the contract execution transaction submitted by the user last time may be determined. The difficulty information update strategy may be set by those skilled in the art according to actual application requirements.

As an example, when the execution result information includes the execution status information used to indicate success or failure of execution, the difficulty information strategy may be: if the execution status information indicates that the execution of the contract execution transaction fails, the difficulty represented by the difficulty information may be increased according to a preset algorithm based on the prestored difficulty information corresponding to the user information. If the execution status information indicates that the contract execution transaction is successfully executed, the difficulty represented by the difficulty information may be reduced according to the preset algorithm based on the prestored difficulty information corresponding to the user information.

Thus, the difficulty information in the contract execution transaction submitted by the user next time may be verified according to the updated difficulty information this time. Specifically, when the user submits the contract execution transaction next time, it may be verified whether the difficulty information in the contract execution transaction is consistent with the difficulty information after this update.

It should be noted that after updating the pre-stored difficulty information corresponding to the user information, the executing body may notify the updated difficulty information to the user indicated by the user information, so that the user may submit the correct contract execution transaction.

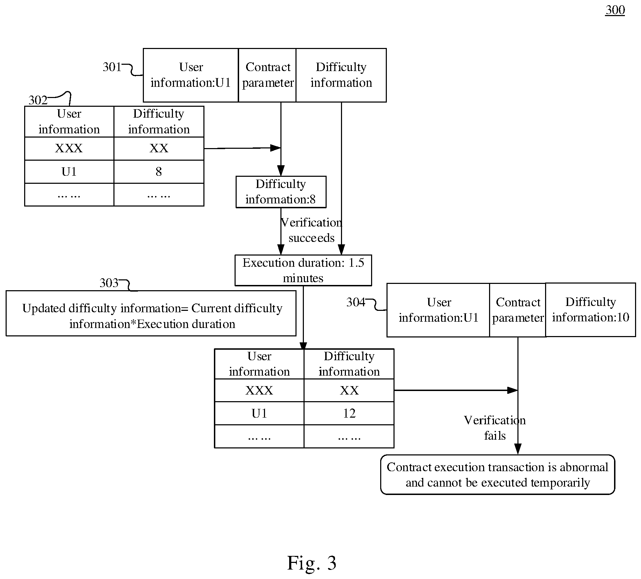

With further reference to Fig. 3, Fig. 3 is a schematic application scenario 300 of the method for executing a smart contract according to the present embodiment. In the application scenario of Fig. 3, after a contract execution transaction 301 submitted by a user is received, according to the user information "U1" in the contract execution transaction 301, the difficulty information corresponding to the user information "U1" may be found in a pre-stored corresponding relationship table 302 as 8. Then, it may be verified that the found difficulty information is consistent with the difficulty information in the contract execution transaction 301. Therefore, the smart contract indicated by the contract execution transaction 301 may be further executed according to contract parameters, and an execution duration is recorded as 1.5 minutes.

Then, it may be determined that the updated difficulty information is 12 based on the current execution duration according to a preset difficulty update method 303. Furthermore, the difficulty information corresponding to the user information "U1" stored in the corresponding relationship table 302 may be changed to 12.

Then, if a contract execution transaction 304 submitted by the user indicated by the user information "U1" is received, the difficulty information corresponding to the user information "U1" may be found in the pre-stored corresponding relationship table 302 as 12. Then, the found difficulty information 12 and the difficulty information 10 in the contract execution transaction 304 may be compared to be inconsistent. Therefore, the verification of the contract execution transaction 304 fails, and the user may be prompted that "the contract execution transaction is abnormal and cannot be executed temporarily".

The method provided by the foregoing embodiments of the present disclosure updates the difficulty information corresponding to the user information according to the current execution result information after each execution of the contract execution transaction, so as to verify a contract execution transaction submitted by the user next time. In other words, the updated difficulty information is used as the cost of the contract execution transaction submitted by the user next time. Thus, the flexible changes of the difficulty information may be controlled according to actual application requirements, and the abuse of contract smart transactions and malicious forgery of contract smart transactions may be controlled, and effective execution of contract execution transactions may be realized. In addition, the disclosed method provided by the above embodiments does not rely on the GAS mechanism in the existing art, and may be flexibly applied to various blockchain systems.

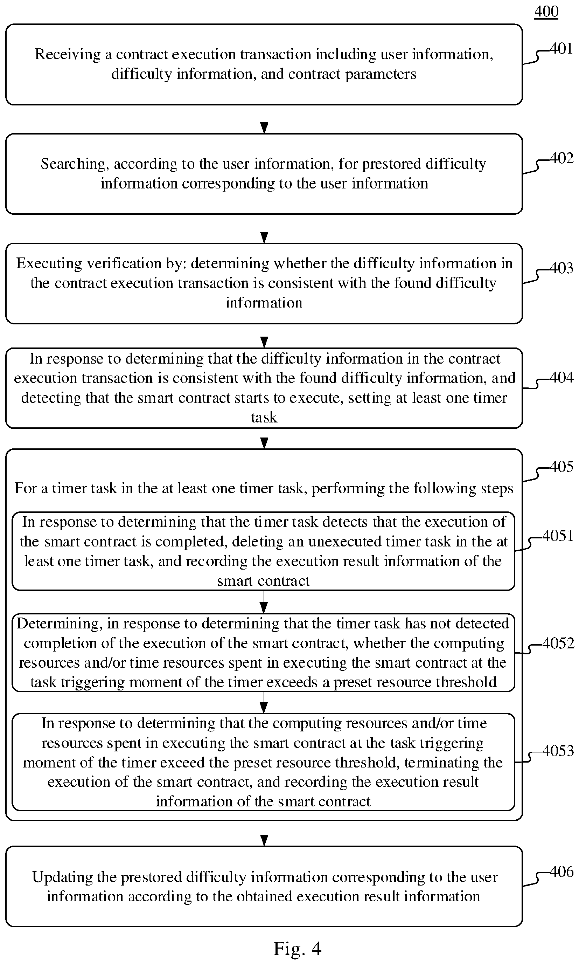

With further reference to Fig. 4, illustrating a flow 400 of another embodiment of the method for executing a smart contract. The flow 400 of the method for executing a smart contract includes the following steps.

Step 401, receiving a contract execution transaction including user information, difficulty information, and contract parameters.

Step 402, searching, according to the user information, for prestored difficulty information corresponding to the user information.

Step 403, executing the following verification by: determining whether the difficulty information in the contract execution transaction is consistent with the found difficulty information.

For the execution process of the foregoing steps 401, 402 and 403, reference may be made to the related descriptions of steps 201, 202 and 203 in the corresponding embodiment in Fig. 2, and repeated description thereof will be omitted.

Step 404, setting at least one timer task, in response to determining that the difficulty information in the contract execution transaction is consistent with the found difficulty information, and detecting that the smart contract starts to execute.

In this step, the timer task may be used to detect whether the execution of the smart contract is completed at a task triggering moment. Generally, each timer task in the at least one timer task has a different task triggering moment.

Step 405, for a timer task in the at least one timer task, performing the following steps 4051-4053:

Step 4051, in response to determining that the timer task detects that the execution of the smart contract is completed, deleting an unexecuted timer task in the at least one timer task, and recording the execution result information of the smart contract.

Step 4052, determining, in response to determining that the timer task has not detected completion of the execution of the smart contract, whether the computing resources and/or time resources spent in executing the smart contract at the task triggering moment of the timer exceeds a preset resource threshold;

The preset resource threshold may be preset by those skilled in the art according to actual application scenarios.

Step 4053, in response to determining that the computing resources and/or time resources spent in executing the smart contract at the task triggering moment of the timer exceed the preset resource threshold, terminating the execution of the smart contract, and recording the execution result information of the smart contract.

Thus, it may prevent the execution of the smart contract from spending excessive resources and causing other smart contracts to fail to execute.

In some alternative implementations of the present embodiment, in response to receiving instruction information for indicating the completion of the execution of the smart contract at a moment other than the task triggering moment corresponding to the at least one timer task respectively, the unexecuted timer task in the at least one timer task may be deleted, and the execution result information of the smart contract may be recorded.

Therefore, while using the at least one timer task to detect the execution process of the smart contract, it may also receive the instruction information sent by the nodes in the blockchain system or the user terminal to indicate the completion of the execution of the smart contract. In this regard, the execution process of the smart contract is detected in many aspects to ensure that it is possible to know whether the execution of the smart contract is completed in time, and at the same time, it may also avoid resource occupation and waste.

Alternatively, the difficulty information update strategy may include: for a smart contract whose execution is terminated, the difficulty information corresponding to the user information of the user who submitted the smart contract may be set to be the highest.

Step 406, updating the prestored difficulty information corresponding to the user information according to the obtained execution result information.

For the execution process of the foregoing step 406, reference may be made to the related description of step 205 in the corresponding embodiment in Fig. 2, and repeated description thereof will be omitted.

Alternatively, the time resources included in the execution result information may include at least one of: an execution duration, or the number of times of execution of a timer.

In the method provided by the above embodiment of the present disclosure, when executing the smart contract, at least one timer task may be set to detect the execution process of the smart contract, to know whether the execution of the smart contract is completed in time, and to terminate the execution of the smart contract in time when the execution of the smart contract consumes excessive resources to realize effective execution of the smart contract.

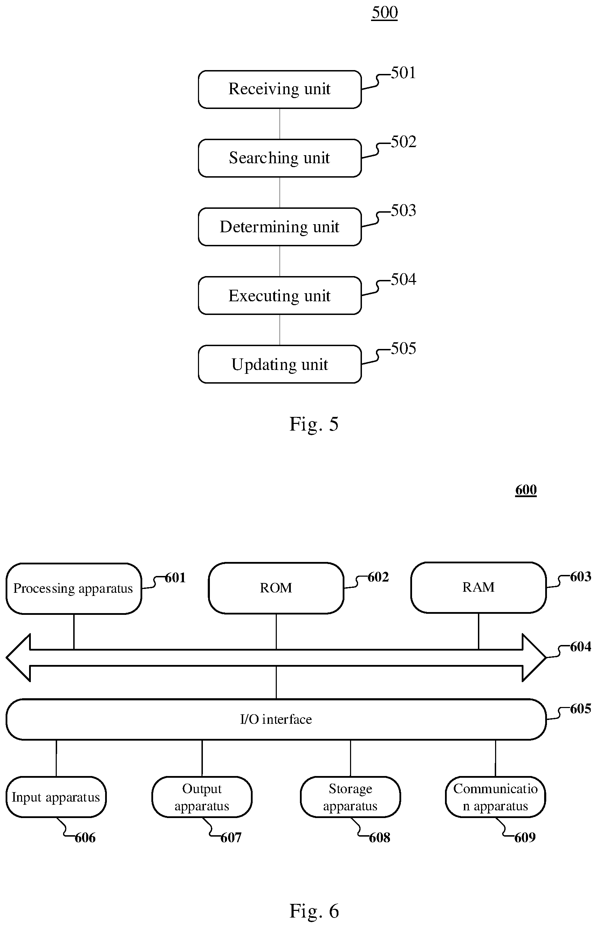

With further reference to Fig. 5, as an implementation of the method shown in the above figures, the present disclosure provides an embodiment of an apparatus for executing a smart contract. The apparatus embodiment corresponds to the method embodiment as shown in Fig. 2. The apparatus may be applied to various electronic devices.

As shown in Fig. 5, an apparatus 500 for executing a smart contract provided by the present embodiment includes: a receiving unit 501, a searching unit 502, a determining unit 503, an executing unit 504 and an updating unit 505. The receiving unit 501 is configured to receive a contract execution transaction including user information, difficulty information, and contract parameters, the contract parameters being used to indicate parameters of a to-be-executed smart contract of the contract execution transaction. The searching unit 502 is configured to search, according to the user information, for prestored difficulty information corresponding to the user information, the difficulty information corresponding to the user information being determined according to execution result information of a contract execution transaction submitted by the user last time indicated by the user information. The determining unit 503 is configured to execute verification by: determining whether the difficulty information in the contract execution transaction is consistent with the found difficulty information. The apparatus further includes: the executing unit 504, configured to execute, in response to determining that the difficulty information in the contract execution transaction is consistent with the found difficulty information, the smart contract according to the contract parameters to obtain execution result information; and the updating unit 505, configured to update the prestored difficulty information corresponding to the user information according to the obtained execution result information.

In the present embodiment, in the apparatus 500 for executing a smart contract: for the specific processing and the technical effects of the receiving unit 501, the searching unit 502, the determining unit 503, the executing unit 504 and the updating unit 505, reference may be made to the relevant descriptions of step 201, step 202, step 203, step 204 and step 205 in the embodiment corresponding to Fig. 2 respectively, and repeated description thereof will be omitted.

In some alternative implementations of the present embodiment, the updating unit 505 is further configured to: determine, according to a preset difficulty information update strategy, difficulty information corresponding to the execution result information as an update result of the prestored difficulty information corresponding to the user information.

In some alternative implementations of the present embodiment, the execution result information includes at least one of: computing resources spent in the execution process, time resources spent in the execution process, or execution status information used to indicate success or failure of execution, where the difficulty information corresponding to the execution result information is positively correlated with the corresponding computing resources, and the difficulty information corresponding to the execution result information is positively correlated with the corresponding time resources.

In some alternative implementations of the present embodiment, the executing unit 504 is further configured to: set, in response to detecting that the smart contract starts to execute, at least one timer task, where the timer task is used to detect whether the execution of the smart contract is completed at a task triggering moment; for a timer task in the at least one timer task, perform following operations: in response to determining that the timer task detects that the execution of the smart contract is completed, deleting an unexecuted timer task in the at least one timer task, and recording the execution result information of the smart contract; determining, in response to determining that the timer task has not detected completion of the execution of the smart contract, whether the computing resources and/or time resources spent in executing the smart contract at the task triggering moment of the timer exceeds a preset resource threshold; and in response to determining that the computing resources and/or time resources spent in executing the smart contract at the task triggering moment of the timer exceed the preset resource threshold, terminating the execution of the smart contract, and recording the execution result information of the smart contract.

In some alternative implementations of the present embodiment, the time resources include at least one of: an execution duration, or a timer execution times.

In some alternative implementations of the present embodiment, the executing unit 504 is further configured to: in response to receiving instruction information for indicating the completion of the execution of the smart contract at a moment other than the task triggering moment corresponding to the at least one timer task respectively, delete the unexecuted timer task in the at least one timer task, and record the execution result information of the smart contract.

In some alternative implementations of the present embodiment, the contract execution transaction further includes: a random number and verification information; and the verification further includes: calculating the verification information based on the random number and the contract parameters, and determining whether the calculated verification information is consistent with verification information in the contract execution transaction; determining, based on a proof-of-work technology, whether the verification information in the contract execution transaction is abnormal verification information; and the executing unit 504 is further configured to: in response to determining that the difficulty information in the contract execution transaction is consistent with the found difficulty information, and determining that the calculated verification information is consistent with the verification information in the contract execution transaction, and determining that the verification information in the contract execution transaction is not abnormal verification information, execute the smart contract according to the contract parameters to obtain the execution result information.

The apparatus provided by the above embodiment of the present disclosure, the receiving unit receives a contract execution transaction including user information, difficulty information, and contract parameters, where the contract parameters is used to indicate parameters of a to-be-executed smart contract of the contract execution transaction; the searching unit searches, according to the user information, for prestored difficulty information corresponding to the user information, where the difficulty information corresponding to the user information is determined according to execution result information of a contract execution transaction submitted by the user last time indicated by the user information; the determining unit executes the following verification by: determining whether the difficulty information in the contract execution transaction is consistent with the found difficulty information. The apparatus further includes: the executing unit, configured to execute, in response to determining that the difficulty information in the contract execution transaction is consistent with the found difficulty information, the smart contract according to the contract parameters to obtain execution result information. The updating unit updates the prestored difficulty information corresponding to the user information according to the obtained execution result information, so that malicious execution of smart contract transactions may be avoided by controlling the difficulty information, and effective execution of contract execution transactions may be realized.

Reference is now made to Fig. 6, which shows a schematic structural diagram of an electronic device (for example, the nodes in the blockchain system in Fig. 1) 600 adapted to implement embodiments of the present disclosure. The electronic device shown in Fig. 6 is only an example, and should not bring any limitation to the function and scope of use of the embodiments of the present disclosure.

As shown in Fig. 6, the electronic device 600 includes a processing apparatus (such as Center Processing Unit, and Graphics Processing Unit) 601, which may execute various appropriate actions and processes in accordance with a program stored in a read-only memory (ROM) 602 or a program loaded into a random access memory (RAM) 603 from a storage apparatus 608. The RAM 603 also stores various programs and data required by operations of the electronic device 600. The processing apparatus 601, the ROM 602 and the RAM 603 are connected to each other through a bus 604. An input/output (I/O) interface 605 is also connected to the bus 604.

Generally, the following apparatus may be connected to the I/O interface 605: an input apparatus 606 including a touch screen, a touchpad, a keyboard, a mouse, a camera, a microphone, an accelerometer, a gyroscope, or the like; an output apparatus 607 including a liquid crystal display (LCD), a speaker, a vibrator, or the like; a storage apparatus 608 including, for example, a magnetic tape, a hard disk, or the like; and a communication apparatus 609. The Communication apparatus 609 may allow electronic device 600 to wirelessly or wirelessly communicate with other devices to exchange data. Although FIG. 6 illustrates an electronic device 600 having various devices, it should be understood that not all apparatus are required to be implemented or shown. More or fewer devices may alternatively be implemented or provided. Each block shown in FIG. 6 may represent one device or multiple apparatus as desired.

In particular, according to the embodiments of the present disclosure, the process described above with reference to the flow chart may be implemented in a computer software program. For example, an embodiment of the present disclosure includes a computer program product, which includes a computer program that is tangibly embedded in a computer-readable medium. The computer program includes program codes for performing the method as illustrated in the flow chart. In such an embodiment, the computer program may be downloaded and installed from a network via the communication apparatus 609, or may be installed from the storage apparatus 608, or may be installed from the ROM 602. The computer program, when executed by the processing apparatus 601, implements the above-mentioned functionalities as defined by the method of the present disclosure.

It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above. In the present disclosure, the computer readable storage medium may be any physical medium containing or storing programs which may be used by a command execution system, apparatus or element or incorporated thereto. In the present disclosure, the computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

The above computer readable medium may be included in the electronic device; or may alternatively be present alone and not assembled into the electronic device. The computer readable medium carries one or more programs that, when executed by the electronic device, cause the electronic device to: receive a contract execution transaction including user information, difficulty information, and contract parameters, the contract parameters being used to indicate parameters of a to-be-executed smart contract of the contract execution transaction; search, according to the user information, for prestored difficulty information corresponding to the user information, the difficulty information corresponding to the user information being determined according to execution result information of a contract execution transaction submitted by the user last time indicated by the user information; execute verification by: determining whether the difficulty information in the contract execution transaction is consistent with the found difficulty information; the method further including: executing, in response to determining that the difficulty information in the contract execution transaction is consistent with the found difficulty information, the smart contract according to the contract parameters to obtain execution result information; and updating the prestored difficulty information corresponding to the user information according to the obtained execution result information.

A computer program code for performing operations in the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the accompanying drawings. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system performing specified functions or operations, or by a combination of a dedicated hardware and computer instructions.

The units involved in the embodiments of the present disclosure may be implemented by means of software or hardware. The described units may also be provided in a processor, for example, may be described as: a processor, including a receiving unit, a searching unit, a determining unit, an executing unit and an updating unit, where the names of these units do not constitute a limitation to such units themselves in some cases. For example, the receiving unit may alternatively be described as "a unit for receiving a contract execution transaction including user information, difficulty information, and contract parameters".

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the present disclosure. Technical schemes formed by the above-described features being interchanged with, but not limited to, technical features with similar functions disclosed in the present disclosure are examples.

## Claims

1. A method for executing a smart contract, the method comprising:
receiving a contract execution transaction comprising user information, difficulty information, and contract parameters, the contract parameters being used to indicate parameters of a to-be-executed smart contract of the contract execution transaction;
searching, according to the user information, for prestored difficulty information corresponding to the user information, the difficulty information corresponding to the user information being determined according to execution result information of a contract execution transaction submitted by the user last time indicated by the user information;
executing verification by: determining whether the difficulty information in the contract execution transaction is consistent with the found difficulty information;
the method further comprising:
executing, in response to determining that the difficulty information in the contract execution transaction is consistent with the found difficulty information, the smart contract according to the contract parameters to obtain execution result information; and
updating the prestored difficulty information corresponding to the user information according to the obtained execution result information.

2. The method according to claim 1, wherein the updating the prestored difficulty information corresponding to the user information according to the obtained execution result information, comprises:
determining, according to a preset difficulty information update strategy, difficulty information corresponding to the execution result information as an update result of the prestored difficulty information corresponding to the user information.

3. The method according to claim 2, wherein the execution result information comprises at least one of: computing resources spent in the execution process, time resources spent in the execution process, or execution status information used to indicate success or failure of execution, wherein the difficulty information corresponding to the execution result information is positively correlated with the corresponding computing resources, and the difficulty information corresponding to the execution result information is positively correlated with the corresponding time resources.

4. The method according to claim 3, wherein the executing the smart contract according to the contract parameters to obtain execution result information, comprises:
setting, in response to detecting that the smart contract starts to execute, at least one timer task, wherein the timer task is used to detect whether the execution of the smart contract is completed at a task triggering moment;
for a timer task in the at least one timer task, performing following operations:
in response to determining that the timer task detects that the execution of the smart contract is completed, deleting an unexecuted timer task in the at least one timer task, and recording the execution result information of the smart contract;
determining, in response to determining that the timer task has not detected completion of the execution of the smart contract, whether the computing resources and/or time resources spent in executing the smart contract at the task triggering moment of the timer exceeds a preset resource threshold; and
in response to determining that the computing resources and/or time resources spent in executing the smart contract at the task triggering moment of the timer exceed the preset resource threshold, terminating the execution of the smart contract, and recording the execution result information of the smart contract.

5. The method according to claim 4, wherein the time resources comprise at least one of: an execution duration, or a number of times of execution of a timer.

6. The method according to claim 4, wherein the executing the smart contract according to the contract parameters to obtain execution result information, further comprises:
in response to receiving instruction information for indicating the completion of the execution of the smart contract at a moment other than task triggering moments respectively corresponding to the at least one timer task, deleting the unexecuted timer task in the at least one timer task, and recording the execution result information of the smart contract.

7. The method according to claim 1, wherein the contract execution transaction further comprises: a random number and verification information; and
the verification further comprises:
calculating the verification information based on the random number and the contract parameters, and determining whether the calculated verification information is consistent with verification information in the contract execution transaction;
determining, based on a proof-of-work technology, whether the verification information in the contract execution transaction is abnormal verification information; and
the executing, in response to determining that the difficulty information in the contract execution transaction is consistent with the found difficulty information, the smart contract according to the contract parameters to obtain execution result information, comprises:
in response to determining that the difficulty information in the contract execution transaction is consistent with the found difficulty information, the calculated verification information is consistent with the verification information in the contract execution transaction, and the verification information in the contract execution transaction is not abnormal verification information, executing the smart contract according to the contract parameters to obtain the execution result information.

8. An apparatus for executing a smart contract, the apparatus comprising:
a receiving unit, configured to receive a contract execution transaction comprising user information, difficulty information, and contract parameters, the contract parameters being used to indicate parameters of a to-be-executed smart contract of the contract execution transaction;
a searching unit, configured to search, according to the user information, for prestored difficulty information corresponding to the user information, the difficulty information corresponding to the user information being determined according to execution result information of a contract execution transaction submitted by the user last time indicated by the user information;
a determining unit, configured to execute verification by: determining whether the difficulty information in the contract execution transaction is consistent with the found difficulty information;
the apparatus further comprising:
an executing unit, configured to execute, in response to determining that the difficulty information in the contract execution transaction is consistent with the found difficulty information, the smart contract according to the contract parameters to obtain execution result information; and
an updating unit, configured to update the prestored difficulty information corresponding to the user information according to the obtained execution result information.

9. The apparatus according to claim 8, wherein the updating unit is further configured to:
determine, according to a preset difficulty information update strategy, difficulty information corresponding to the execution result information as an update result of the prestored difficulty information corresponding to the user information.

10. The apparatus according to claim 9, wherein the execution result information comprises at least one of: computing resources spent in the execution process, time resources spent in the execution process, or execution status information used to indicate success or failure of execution, wherein the difficulty information corresponding to the execution result information is positively correlated with the corresponding computing resources, and the difficulty information corresponding to the execution result information is positively correlated with the corresponding time resources.

11. The apparatus according to claim 10, wherein the executing unit is further configured to:
set, in response to detecting that the smart contract starts to execute, at least one timer task, wherein the timer task is used to detect whether the execution of the smart contract is completed at a task triggering moment;
for a timer task in the at least one timer task, perform following operations:
in response to determining that the timer task detects that the execution of the smart contract is completed, deleting an unexecuted timer task in the at least one timer task, and recording the execution result information of the smart contract;
determining, in response to determining that the timer task has not detected completion of the execution of the smart contract, whether the computing resources and/or time resources spent in executing the smart contract at the task triggering moment of the timer exceeds a preset resource threshold; and
in response to determining that the computing resources and/or time resources spent in executing the smart contract at the task triggering moment of the timer exceed the preset resource threshold, terminating the execution of the smart contract, and recording the execution result information of the smart contract.

12. The apparatus according to claim 11, wherein the time resources comprise at least one of: an execution duration, or a number of times of execution of a timer.

13. The apparatus according to claim 11, wherein the executing unit is further configured to: in response to receiving instruction information for indicating the completion of the execution of the smart contract at a moment other than the task triggering moment corresponding to the at least one timer task respectively, delete the unexecuted timer task in the at least one timer task, and record the execution result information of the smart contract.

14. The apparatus according to claim 8, wherein the contract execution transaction further comprises: a random number and verification information; and
the verification further comprises:
calculating the verification information based on the random number and the contract parameters, and determining whether the calculated verification information is consistent with verification information in the contract execution transaction;
determining, based on a proof-of-work technology, whether the verification information in the contract execution transaction is abnormal verification information; and
the executing unit is further configured to: in response to determining that the difficulty information in the contract execution transaction is consistent with the found difficulty information, the calculated verification information is consistent with the verification information in the contract execution transaction, and the verification information in the contract execution transaction is not abnormal verification information, execute the smart contract according to the contract parameters to obtain the execution result information.

15. An electronic device, comprising:
one or more processors; and
a storage apparatus storing one or more programs thereon;
wherein the one or more programs, when executed by the one or more processors, cause the one or more processors to implement the method according to any one of claims 1 to 7.

16. A computer-readable medium, storing a computer program thereon, wherein the program, when executed by a processor, implements the method according to any one of claims 1 to 7.
